# EUROPEAN PATENT APPLICATION

(11) **EP 0 991 269 A2**
(43) Date of publication of application: **05.04.2000**
(21) Application number: 99307743.7
(22) Date of filing: 30.09.1999
(51) Int. Cl.: H04N 5/232

(54) **Camera system and lens system**

(30) Priority: 30.09.1998 JP 27766098; 10.11.1998 JP 31900198
(71) Applicant: CANON KABUSHIKI KAISHA, Tokyo (JP)
(72) Inventor: Tanaka, Isao, c/o Canon Kabushiki Kaisha, Tokyo (JP)
(74) Representative: Beresford, Keith Denis Lewis

(57) **Abstract**

A camera system or a lens system of the present invention comprises reading means for reading setting information relating to photographing from an external storage medium storing the setting information thereto, recording means for storing said read setting information to another external storage medium, and control means for performing an operation for specific photographing by using said setting information so that a control operation of an individual taste can be arbitrarily set.

## Description

### BACKGROUND OF THE INVENTION

### Field of the Invention

The present invention relates to a camera system and a lens system having a movable optical member for zoom, focus, etc.

### Related Background Art

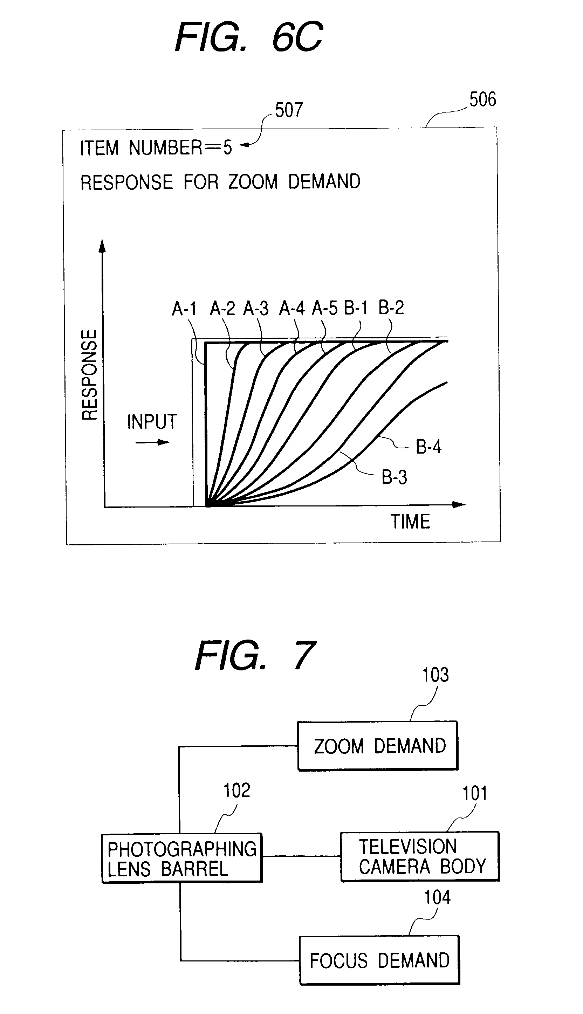

As shown in Fig. 7, in a television camera system as a conventional camera system, a television camera body 101 as an image pickup device is connected to a photographing lens barrel 102 and is also connected to a zoom demand 103 and a focus demand 104 as a photographing lens remote control device. An operator such as a cameraman, etc. can zoom and focus a television lens as the photographing lens barrel by operating the zoom demand and the focus demand so that pictures according to situations can be made.

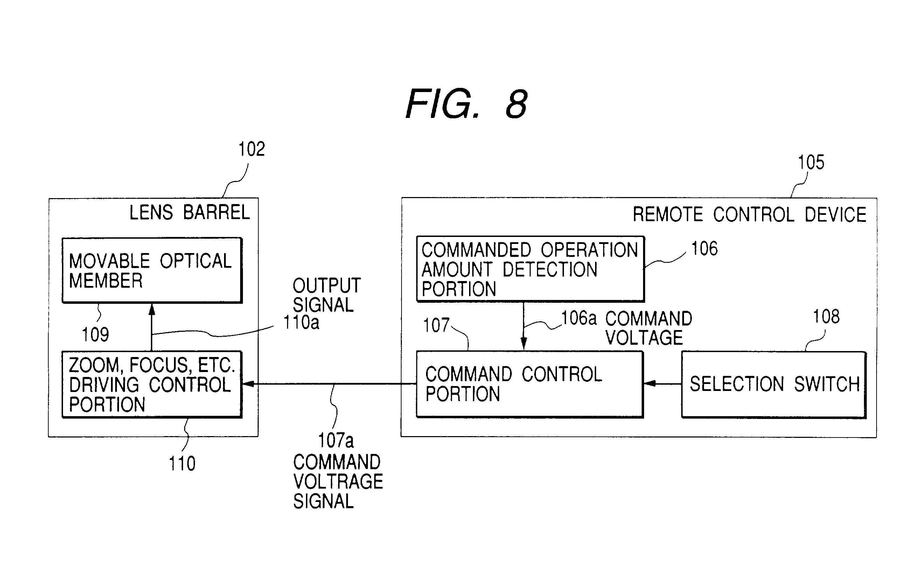

Fig. 8 illustrates a block diagram showing a lens system in the conventional television camera system in control of a movable optical member such as a zoom lens, a focus lens, etc. In Fig. 8, The operator such as a cameraman operates a command member of the zoom demand and the focus demand in a remote control device 105 so that a command voltage 106a according to an operation amount is generated from a commanded operation amount detection portion 106. This command voltage 106a is converted to a command voltage signal 107a suitable for a television lens device by a command control portion 107 constructed by an analog circuit, etc. and is inputted to the lens barrel 102 as a photographing lens device.

The command voltage signal 107a inputted to the lens barrel 102 is inputted to a zoom, focus, etc. driving control portion 110 constructed by an analog servo circuit, etc. as a command value. A motor for operating the zoom lens, the focus lens, etc. is driven by an output signal 110a of the zoom, focus, etc. driving control portion 110 so that a movable optical member 109 associated with the motor is operated.

It is conventionally required in the driving operation such as zooming, focusing, etc. of the television lens that servo characteristics and operationality of the television lens are easily changed by differences in photographing object such as drama photographing, sports relay broadcasts, etc. and differences in operating techniques of cameramen.

For example, servo characteristics for enabling smooth zooming by a slow zoom instead of a speedy operation in zooming are required in drama photographing within a studio. Further, operationality for making focusing easy is required in focusing in a distance range in which a photographing set is arranged within the studio.

In contrast to this, servo characteristics for rapidly setting zooming and focusing speeds to maximum speeds are required in outdoor photographing, e.g., a baseball relay broadcast so as to chase a photographed body and a ball running fast. Further, operationality for making focusing easy on an infinite side instead of a close side is required in focus.

As mentioned above, no servo characteristics of a television lens device can be changed in the conventional television camera system or lens system in accordance with the differences in photographing objects and a photographer's taste with respect to requests in which the photographer wants to easily change the servo characteristics and operationality of the television camera system.

In some case of the focus demand and the zoom demand, as shown in Fig. 8, there is a technique in which operationality of the demands is changed by switching a selection switch 108, and discontinuously or continuously switching a constant of an analog circuit within the demands using a volume so that the relation of an operation amount and a command voltage is changed.

However, the technique for changing operationality by varying a command value with respect to the operation amount by switching the analog circuit constant within the demands using a switch and a volume has the following defects.

No servo characteristics of the television lens device itself can be changed and no operationality including the servo characteristics is improved. Only several kinds of limited fixing patterns constantly set by hardware in advance can be selected in switching of the relation of the demand operation amount and the command amount using switches attached to the zoom demand and the focus demand. Accordingly, it is impossible to satisfy requests of all photographing situations and an operator by these several kinds of fixing patterns.

Further, the technique for continuously changing the circuit constant by the volume is very complicated since a volume adjustment and operation conformation are repeated many times and these operations must be performed every photographing. Furthermore, in these demands, only the relation of a preset command amount and the command voltage can be selected so that no operator can easily change the command amount and voltage to desirable setting values and can store these setting values.

As shown in the conventional example, changeable items are only the operation amount and the command amount of an operation member of the zoom demand or the focus demand.

### SUMMARY OF THE INVENTION

One aspect of the invention resides in a camera system or a lens system comprising reading means for reading setting information relating to photographing from an external storage medium storing the setting information thereto; recording means for storing said read setting information to another external storage medium; and control means for performing an operation for specific photographing by using said setting information. A control operation of an individual taste can be arbitrarily set in the camera system or the lens system.

Other features will become apparent from the following description of a detailed explanation.

### BRIEF DESCRIPTION OF THE DRAWINGS

Fig. 1 is a block diagram showing the construction of a camera system in accordance with a first embodiment;
Fig. 2 is a perspective view showing the entire lens system in accordance with the first embodiment;
Fig. 3 is a view showing the outer view of a memory card unit in accordance with the first embodiment;
Fig. 4 is a view showing contents stored in a storage medium in accordance with the first embodiment;
Figs. 5A and 5B are views showing setting contents of a first external storage medium in accordance with the first embodiment;
Figs. 6A, 6B and 6C are views showing the setting contents of the first external storage medium in accordance with the first embodiment;
Fig. 7 is a view showing a conventional television camera system;
Fig. 8 is a view showing the conventional television camera system;
Fig. 9 is a block diagram showing the construction of a camera system in accordance with a third embodiment;
Fig. 10 is a perspective view showing an entire lens system in accordance with the third embodiment;
Figs. 11A, 11B, 11C, 11D and 11E are views showing setting contents of an external control apparatus (external apparatus) in accordance with the third embodiment;
Fig. 12 is an operation flow chart in the external control apparatus (external apparatus) in accordance with the third embodiment;

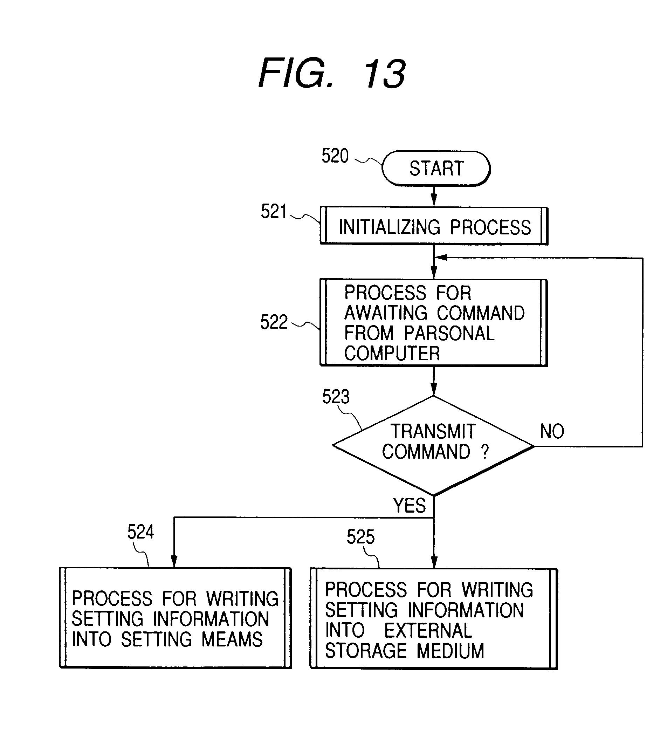

Fig. 13 is an operation flow chart in the lens system in accordance with the third embodiment;
Fig. 14 is a block diagram showing the construction of a camera system in accordance with a fourth embodiment;
Fig. 15 is a block diagram showing the construction of a camera system in accordance with a fifth embodiment; and
Fig. 16 is a block diagram showing the construction of a camera system in accordance with a sixth embodiment.

### DESCRIPTION OF THE PREFERRED EMBODIMENTS

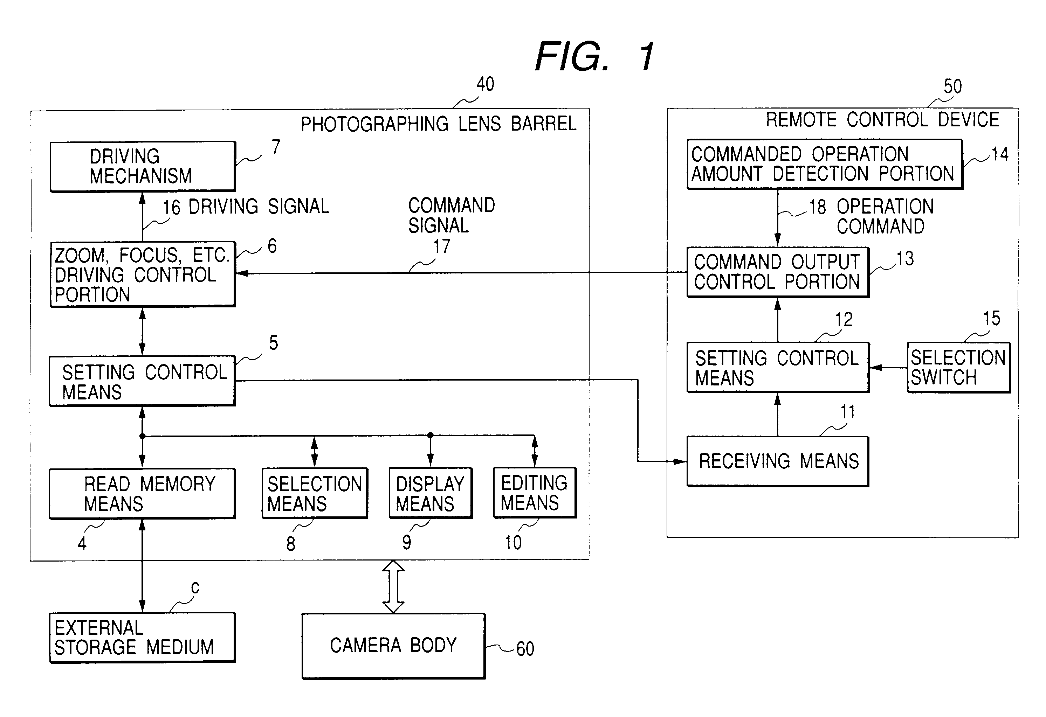

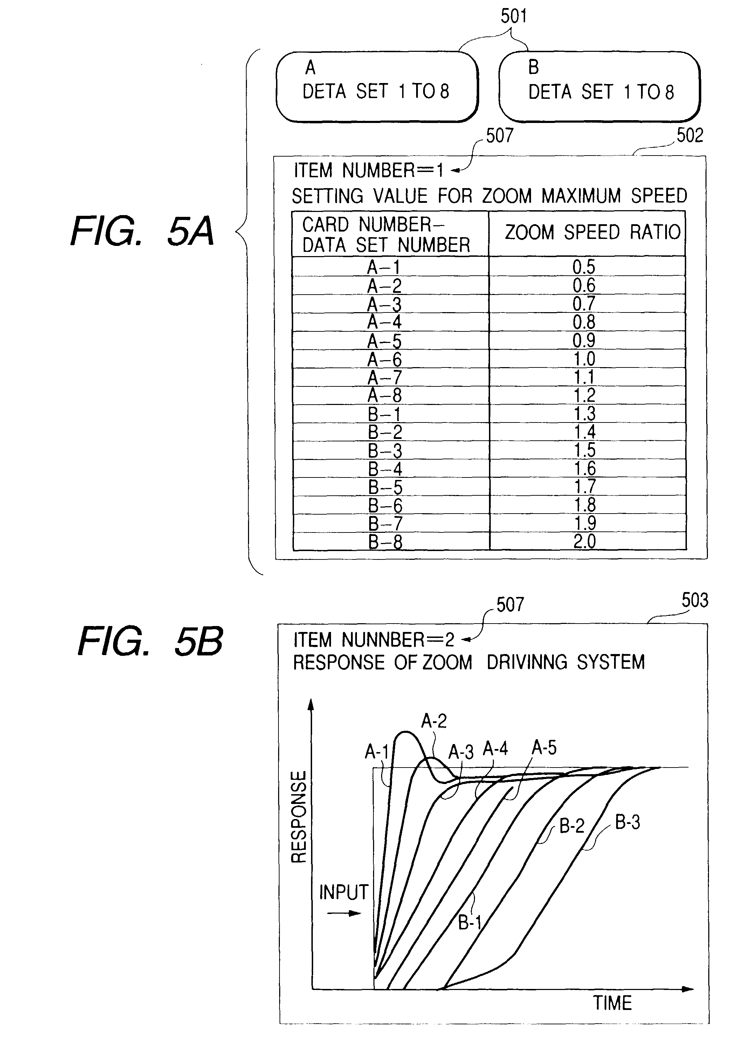

Figs. 1 to 5A and 5B are control block diagrams of zoom, focus, etc. optical movable members in a lens system in a television camera system showing the features of a first embodiment, and outer views of a lens barrel and a remote control device.

In Figs. 1 to 3, reference symbol c designates an external storage medium such as a card memory storing contents thereto, a memory of an external personal computer, a memory medium in a communication network, a memory of a camera body, etc. A photographing lens barrel 40 has a zoom portion, a focus portion and a control circuit described later and is mounted to the camera body 60.

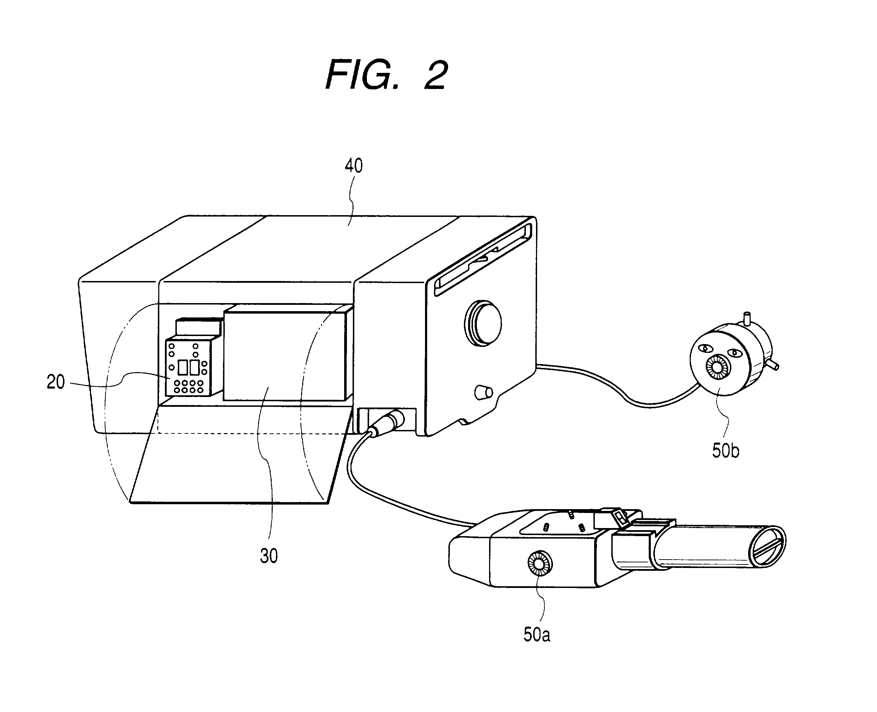

A remote control device 50 for the photographing lens barrel is constructed by e.g., a zoom demand (50a in Fig. 2) and a focus demand (50b in Fig. 2).

Accordingly, the camera system is constructed by the photographing lens barrel 40, the remote control device 50 and the camera body 60. The lens system used in the camera system is constructed by the photographing lens barrel 40 and the remote control device 50.

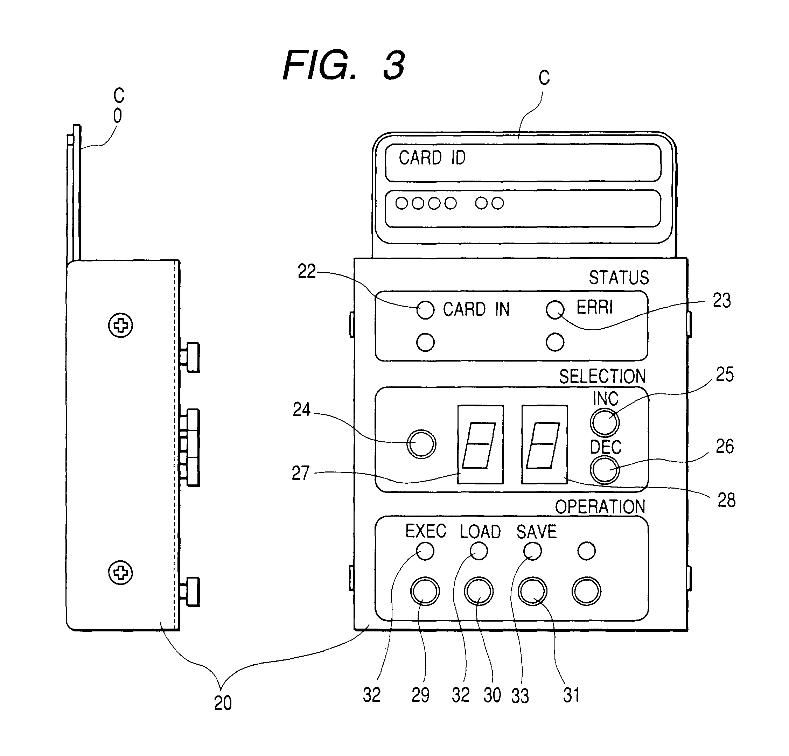

In Fig. 2, a memory card unit 20 reads information of the external storage medium c and displays the read information and has a selection switch, etc. for performing control according to a photographing situation. Detailed contents of this memory card unit will be explained later on the basis of Fig. 3.

A television lens control portion 30 performs control relating to the above television lens system having a zoom focus, etc. driving control portion and others.

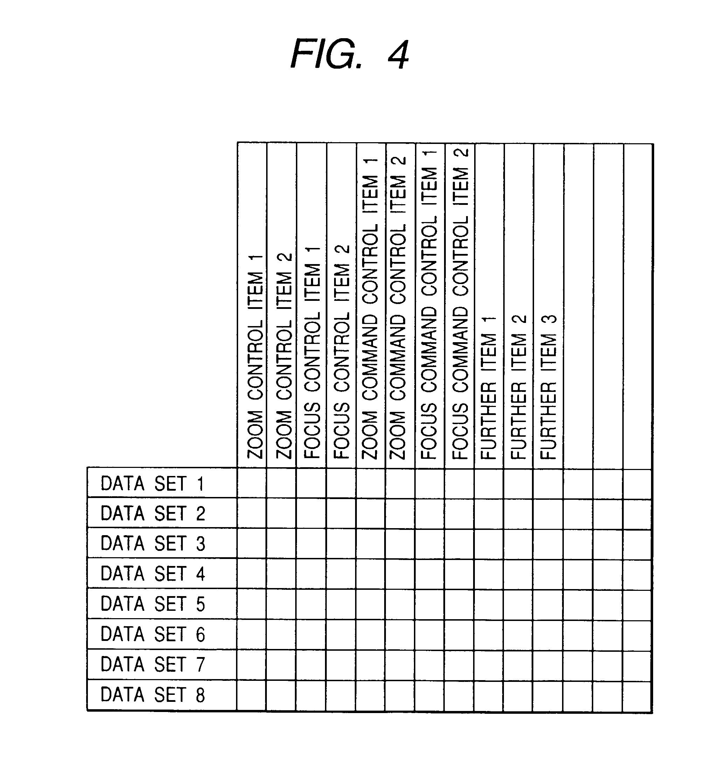

Contents stored in the above-mentioned external storage medium c will next be explained slightly on the basis of Fig. 4. Fig. 4 shows one example of setting information within the card memory c as one card type storage medium.

In Fig. 4, for example, eight kinds of data sets can be stored in one card memory and numbers 1 to 8 are given to the respective data sets. For example, these numbers of the data sets are set to correspond to plural photographing situations such as field photographing, drama photographing, studio photographing, etc.

In the field photographing, there are sports photographing, landscape photographing, etc., and a cameraman selects the necessary suitable data set number in accordance with these photographing situations.

As shown in Fig. 4, there are plural setting items in one data set. In Fig. 4, there are two setting items relating to zoom drive control and there are two setting items relating to focus drive control.

Further, there are two setting items relating to command control of the zoom demand, and there are two setting items relating to command control of the focus demand, and there are plural setting items relating to further controls.

One setting value is provided from plural setting values every setting item. Such information (setting parameter) is stored in the card memory as the storage medium, and a photographer selects and sets these information in accordance with necessity.

Specific examples of these items include, first, as the setting items relating to the zoom drive control, a response for setting of a zoom control system such as a zoom speed (setting of a maximum speed), rising and falling characteristics with respect to zoom commands, response of a zoom control system, etc.

As the setting items relating to the focus drive control, there includes a focus speed (setting of a maximum focus speed), a stopping position accuracy of a focus lens, response of a focus control system, etc.

As the setting items relating to the command control of the zoom demand, there includes a dead zone width with respect to a zoom operation of a photographer, responsiveness, setting of the relation of an operation amount and an output command amount, etc. There includes a relation between an operation amount and an output command amount, or the like in the setting items relating to the focus demand.

In the other setting items, there are an item for setting whether a rewritable or inhibiting operation is performed every data set, an item for validating or invalidating the item itself for setting whether the rewritable or inhibiting operation is performed every data set, etc.

The data set set in accordance with a photographing condition and a taste of an operator such as a cameraman, etc., is stored in the card memory c as a storage medium every these setting items. The operator reads this data set from this card memory c as a storage medium in accordance with necessity.

Namely, the data set can be freely set every operator such as a cameraman, etc. Zoom servo characteristics, focus servo characteristics, zoom demand operation characteristics, focus demand operation characteristics, etc. are changed by plural setting items and plural setting values in accordance with a photographing situation, etc. Thus, characteristics close to infinity can be obtained.

Back to Fig. 1, an operation of the lens system controlled on the basis of such stored information will be explained here.

A read memory means 4 reads information from an external storage medium (card memory) and records this information. The read memory means 4 reads setting information, etc. such as various kinds of control parameters, etc. mentioned above with respect to the photographing lens barrel 40 and the photographing lens remote control device 50 from the card memory c as an external storage medium. The read memory means 4 also records this setting information, etc. This read memory means 4 has plural memory areas and can temporarily store (record) the read information from the card memory c as an external storage medium, and can also store selected read information described later and edited individual information.

A setting control means 5 changes various kinds of driving control parameters (arithmetic coefficients, etc.) of a zoom, focus, etc. driving control portion 6 to contents to be set in accordance with a setting item on the basis of the setting information, etc. read from the read memory means 4 when this setting information is setting information relating to driving control of a movable optical member (a zoom lens, a lens for focus or correction) for e.g., zoom, focus, etc. When this setting information is setting information on a side of the photographing lens remote control device 50, this setting information is transmitted to a receiving means 11 within the photographing lens remote control device 50.

The driving control portion 6 of zoom, focus, etc. outputs a driving signal 16 for driving a motor of zoom, focus, etc. on the basis of a control parameter relating to the driving control of zoom, focus, etc. set by the setting control means 5, and a command signal 17 of zoom, focus, etc. given from a command output control portion 13 within the photographing lens remote control device 50.

A driving mechanism 7 includes a motor for operating a focus lens, a zoom lens, etc., and a potentiometer and a rotary encoder, etc. for position detection. The driving mechanism 7 optically changes zooming, focusing, etc. on the basis of an output signal from the driving control portion 6.

A selection means 8 selects information read from the setting information within the card memory c as an external storage medium read by the read memory means 4. The selection means 8 also selects setting information recorded on the external storage medium when the setting information held within the photographing lens barrel 40 or the photographing lens remote control device 50 is recorded on the external storage medium (e.g., card memory).

A display means 9 is arranged so as to confirm a state of the setting information, etc. by an operator. An editing means 10 can make a combination of new setting information by reading plural setting information from single or plural external storage media c by the read memory means 4.

A receiving means 11 is arranged in the photographing lens remote control device 50, and receives setting information to be changed on a side of the photographing lens remote control device 50 sent from the setting control means 5 within the photographing lens barrel 40.

A setting control means 12 on a side of the photographing lens remote control device 50 performs various kinds of setting operations on the side of the photographing lens remote control device 50 on the basis of various kinds of setting information from the receiving means 11 and information from a selection switch 15 attached to the photographing lens remote control device 50. For example, when the setting information relates to command control, this setting control means 12 sets a parameter, etc. relating to the command control to the command control portion 13.

A commanded operation amount detection portion 14 outputs an operation command 18 proportional to an operation amount of an operator such as a cameraman, etc. when the operator performs zoom and focus operations, etc. A command output control portion 13 generates a command signal 17 given to the photographing lens barrel 40 on the basis of an operation command 18 from the commanded operation amount detection portion 14 and a parameter relating to the command control set by the setting control means 12 within the photographing lens remote control device 50.

In the memory card c as an external storage medium, there are a master-like memory card cl as a first external storage medium and a personal memory card c2 as a second external storage medium. The master-like memory card cl is constructed by plural sheets to which all setting values are stored every setting item. An operator individually possesses the personal memory card c2.

The master-like memory card cl as the first external storage medium is provided to a user as one of constructional parts of the memory card unit or an option, and is set such that setting contents stored in the storage medium in advance are described in detail on a paper face of an instruction manual, etc.

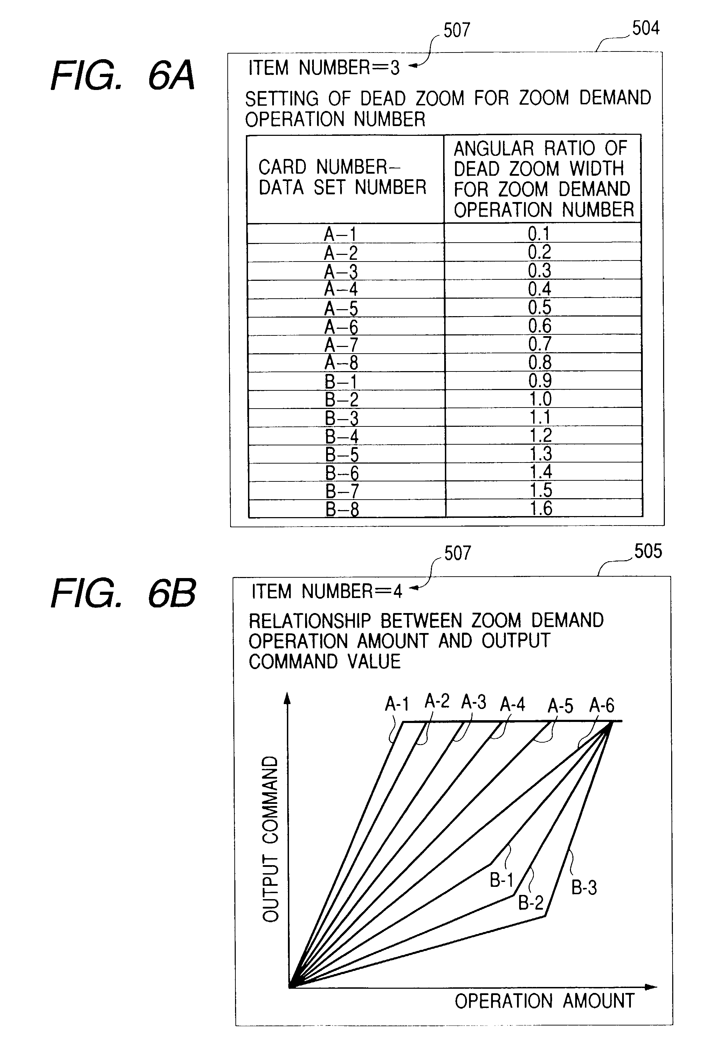

Each of Figs. 5A, 5B and Figs. 6A to 6C shows a conceptual view of the master-like memory card cl as one example.

In Figs. 5A and 5B, reference numeral 501 designate two master-like memory cards cl and identification names A, B for identification are set to be respectively marked to these cards. These two master-like memory cards cl are respectively set to have setting information corresponding to eight program sets.

The setting contents every setting item in the master-like memory cards cl of the above A and B are displayed by numeric values or graphs on the paper face of the instruction manual, etc. of the memory cards or the memory card unit.

In a display example of the setting contents every item, reference numeral 502 designates a ratio of a zoom speed to a standard zoom speed for selecting a zoom maximum speed. Reference numeral 503 shows a responsive waveform with respect to a step input for selecting the responsiveness of a zoom driving system. In Figs. 6A to 6C, reference numeral 504 designates a ratio of a dead zone width to a standard dead zone width for selecting the dead zone width of a zoom demand operation member. Reference numeral 505 designates a graph for selecting the relation of a zoom demand operation amount and an output command. Reference numeral 506 designates a responsive waveform with respect to the step input for selecting a response of the zoom demand.

Each of reference numerals 502 to 506 designates one portion of a setting item relating to zoom, but there are also similar tables and graphs in items of focus and others in addition to this setting item. An item number 507 is marked every setting item.

In the master-like memory card cl as the above first external storage medium, a setting item for validating/invalidating the setting item of the rewritable/inhibiting operation of a program set is set to be invalid, and this information is read by the read memory means 4 and no rewriting operation can be performed.

This master-like memory card cl has ID information in which this memory card is a master-like memory card. The read memory means 4 can discriminate an inserted memory card from this ID information.

An operator such as a cameraman, etc. stores driving characteristics and operation characteristics of zoom, focus, etc. according to a photographing object and an individual taste to the personal memory card c2 as the second external storage medium. The operator can call and reproduce the driving characteristics and the operation characteristics from the personal memory card c2 at any time. The personal memory card c2 is basically set such that no setting value is written to this personal memory card c2 in an initial state.

In the above personal memory card c2, the setting item for validating/invalidating the setting item of the rewritable/inhibiting operation of the program set is set to be valid. The rewritable/inhibiting operation every program set can be set by operating a switch of the memory card unit described later.

This personal memory card c2 has ID information in which this memory card is a personal memory card. The read memory means 4 can discriminate an inserted memory card by this ID information.

An operation for selecting desirable characteristics from the master-like memory card cl as the first external storage medium and executing these desirable characteristics will next be explained.

An operator first inserts the master-like memory card cl into the memory card unit 20 shown in Fig. 3. While the operator sees the display means 9 and refers to tables and graphs designated by reference numerals 502 to 506 by means of the selection means 8, the operator selects a combination of an item to be executed and a setting value.

For example, when a zoom maximum speed 0.7 with respect to a standard maximum speed is selected and executed in the case of Figs. 5A, 5B and Figs. 6A to 6C, the master-like memory card cl as a first external storage medium A is inserted into the memory card unit and a data set number is set to 3 and an item number is set to 1. Thereafter, an executing operation is performed.

Thus, various kinds of setting values selected by the read memory means 4 are read and are once stored in a predetermined memory area. If a lens is operated as it is, various kinds of driving control parameters of the above zoom, focus, etc. driving control portion 6 are changed by the setting control means 5 on the basis of the setting value read to the above predetermined memory area.

When a setting value relating to the photographing lens remote control device 50 is included in the selected setting values, various kinds of setting values are transmitted to the setting control means 12 within the photographing lens remote control device 50 from the setting control means 5 on a side of the photographing lens barrel 40 via the receiving means 11 within the photographing lens remote control device 50.

The setting control means 12 on a side of the photographing lens remote control device 50 determines and sets a parameter, etc. for command control to be set in the command control portion 13 in accordance with various kinds of setting values inputted through the receiving means 11 and a state of the selection switch 15 attached to the photographing lens remote control device 50.

The command control portion 13 converts an operation command 18 from the commanded operation amount detection portion 14 on the basis of the setting value set by the setting control means 12, and outputs this operation command 18 as a command signal 17 to the photographing lens barrel 40.

Thus, the operator can easily change various kinds of control parameters of the photographing lens barrel 40 and the photographing lens remote control device 50 by using the master-like memory card cl as the first external storage medium.

For example, operation characteristics of the zoom demand and the focus demand using a switch and a volume are conventionally slightly changed with respect to driving control of zoom, focus, etc. However, in comparison with this conventional change, characteristics close to infinity are obtained by changing zoom servo characteristics, focus servo characteristics, zoom demand operation characteristics, focus demand operation characteristics, etc. according to a photographing situation, etc. by plural setting items and plural setting values.

The operator selects and reads setting information from the master-like memory card cl as the above first external storage medium. Subsequently, the operator once pulls-out the master-like memory card cl and inserts the personal memory card c2 as the second external storage medium individually possessed by a photographer into the memory card unit 20.

Then, the operator operates the read memory means 4 while the operator confirms a setting item and plural setting values stored in a predetermined memory area of the read memory means 4 by the display means 9. Thus, the setting information obtained from the master-like memory card cl as the first external storage medium can be recorded on the personal memory card c2 as the second storage medium individually possessed.

If the setting information to be stored in the personal memory card c2 is once edited by the editing means 10, various kinds of setting items and plural setting values combined without performing any particular selecting operation can be simply transferred to the personal memory card c2.

Only a required setting value is sequentially inputted by the editing means 10 to the read memory means 4 from plural master-like memory cards cl as plural first external storage media. Thereafter, the personal memory card c2 as the second external storage medium is inserted into the memory card unit 20, and a recording operation is performed. Thus, only a required setting value can be selected and edited from the plural master-like memory cards and can be recorded on one personal memory card c2.

For example, in Figs. 5A, 5B and Figs. 6A to 6C, there is a case in which a zoom maximum speed (setting item) is set to 0.7 times the standard zoom speed (setting value) and a dead zone width of the zoom demand (setting item) is set to 1.3 times the standard dead zone width (setting value) in a new data set. When this new data set is made in the personal memory card c2 as the second external storage medium, a memory card cl as a first external storage medium is first inserted into the memory card unit 20 and a data set number is set to 3 and an item number is set to 1 by the selecting means 8. Thereafter, a reading operation is performed by operating the read memory means 4.

A memory card cl as a first external storage medium B is next inserted into the memory card unit 20, and the data set number is set to 5 and the item number is set to 3 by the selecting means 8. Thereafter, the reading operation is again performed by operating the read memory means 4.

The personal memory card c2 as the above second external storage medium is finally inserted into the memory card unit 20 and a writing operation is performed by operating the read memory means 4. Thus, it is possible to make the memory card c2 to which personal setting information in a true meaning is stored.

Thus, the operator can easily construct a lens system according to an operator's taste.

In Fig. 3, a specific construction of the memory card unit 20 will next be explained.

As mentioned above, various kinds of setting information can be read and written to the memory card (card type storage medium) c as an external storage medium and this memory card c can be inserted into the memory card unit and can be detached from this memory card unit. A display device 22 of storage medium installation displays whether a correct memory card c is mounted to the memory card unit or not. An error display device 23 displays a warning when no operation with respect to the memory card c can be normally performed.

A changeover switch 24 is arranged to select a mode for selecting the above setting items (item numbers 1 to 4) or a mode for selecting a setting value (set number) within the setting items.

Selection switches 25 and 26 are arranged to select contents selected in the setting item or the setting value selected by the above changeover switch 24, and are specifically constructed by up and down switches.

A data set number display device 27 displays the number of a data set (item number) selected at present. An item display device 28 displays a corresponding item of the setting value selected at present.

An execution switch 29 is arranged to read single or plural items within one data set selected by the changeover switch 24 and the selection switches 25, 26 from the memory card c, and change a single of plural settings of the photographing lens barrel 40 and the photographing lens remote control device 50 on the basis of the read setting value.

A reading switch 30 is arranged to read single or plural items within one data set selected by the changeover switch 24 and the selection switches 25, 26 from the memory card c, and store this read item into the photographing lens barrel 40 or the photographing lens remote control device 50.

A writing switch 31 is arranged to rewrite single or plural items selected by the changeover switch 24 and the selection switches 25, 26 among various kinds of setting values stored in the photographing lens barrel 40 or the photographing lens remote control device 50, with respect to single or plural items within the data set within the memory card c similarly selected by the changeover switch 24 and the selection switches 5, 6.

An execution state display device 32 displays that the photographing lens barrel 40 and the photographing lens remote control device 50 are operated by the execution switch 29 on the basis of a setting value read from the memory card c.

A reading display device 33 displays that setting information is read by the reading switch 30 from the memory card c into the photographing lens barrel 40 and the photographing lens remote control device 50.

A writing display device 34 displays that a designated setting item is written by the writing switch 31 from the photographing lens barrel to the memory card c.

In the construction of Fig. 3, an operator first inserts a preset memory card c into the memory card unit 20. When the mounted memory card c can be correctly recognized, the photographer recognizes this card by lighting or flashing the display device 22 of storage medium installation.

When no mounted memory card c is correctly recognized, the error display device 23 is lighted or flashed.

After the memory card c is correctly recognized and the display device 22 of storage medium installation is lighted or flashed, the operator operates the changeover switch 24 and the selection switches 25 and 26 so as to select a data set and single or plural set numbers to be set in the photographing lens barrel 40 and the photographing lens remote control device 50 while the operator confirms the data set and the set number by the data set number display device 27 and the item display device 28.

Next, the operator operates the execution switch 29 or one of the reading switch 30 and the writing switch 31 to determine what is executed with respect to the selected data set and the selected set number.

The above selected data set and the selected set number are called from the card type storage medium c by operating the execution switch 29 and this calling operation is executed and the execution display device 32 is lighted or flashed.

Similarly, an item selected in the above selected data set is read from the card type storage medium c to the photographing lens barrel 40 or the photographing lens remote control device 50 by operating the reading switch 30, and the reading display device 33 is lighted or flashed.

Similarly, the item selected in the above selected data set is written to the memory card c from the photographing lens barrel 40 or the photographing lens remote control device 50 by operating the writing switch 30. Thus, a combination of the setting item and the setting value is stored in the personal memory card c2.

Namely, the setting value every setting item is read by using the reading switch 30 from the master-like memory card cl to which each of various kinds of single or plural setting values is stored in advance. A combination of new setting values is then made and one data set within the personal memory card c2 can be made by operating the writing switch 31.

The read memory means 4 is constructed such that rewritable and inhibiting settings can be enabled by compositely operating various kinds of operation switches mentioned above every data set to the personal memory card c2 as the above second external storage medium. Thus, no data set is carelessly erased.

When a writing operation is performed with respect to a data set to the rewriting inhibition, the above error display device 23 is lighted or flashed and it is warned that no rewriting operation can be performed.

In this embodiment explained above, the memory read means is arranged in the lens barrel as an example. However, the present invention is not limited to this embodiment, but the memory reading means may be arranged in the remote operation control device. At this time, the receiving means is arranged on a side of the lens barrel.

A second embodiment will next be explained.

A specific program for controlling the operation of a lens system is stored in the master-like memory card cl as the above-mentioned first storage medium as well as the setting items and the setting values mentioned above. This program can be read by the read memory means 4.

An operator (photographer) reads the program from the master-like memory card cl in accordance with necessity, and can write this program to the individual personal memory card c2.

For example, there is a program for constantly setting an angle of view at any time by automatically moving a zoom lens by an arithmetic operation at a focus operating time to correct a change in the angle of view using focus as a specific program. In another example, there is a program for obtaining special image effects by slightly vibrating the zoom lens.

Similar to the setting items and the setting values mentioned above, such programs can be easily embodied only by forming storing areas of these programs in the memory cards cl and c2.

The photographer (operator) can select an operation member in accordance with a photographer's taste by providing setting information for switching operation objects of various kinds of operation means in the lens system to the master-like memory card cl as the first storage medium.

In the above embodiments, no information can be written to the master-like memory card cl as the first storage medium. However, for example, it is also meaningful that information such as a user ID, etc. is written and it can be discriminated whether the photographer already uses this master-like memory card cl or not.

In the above embodiments, the lens system is formed by separating the photographing lens barrel and the remote control device. However, a lens system or a camera system formed by integrating the photographing lens barrel and the remote control device with each other is also naturally included in the scope of the present invention.

In accordance with the above embodiments, it is possible to perform a specific operation for changing a preset operation for photographing in the camera system, or a specific operation for partially changing the preset operation for photographing. Thus, an operation according to an individual taste as the camera system can be arbitrarily set.

Further, control parameters of an optical means for controlling focus, zoom, etc. divided by each individual taste can be particularly set in accordance with the individual taste.

Further, required setting information can be selectively stored from the first external storage medium to the second external storage medium so that an operation for photographing in conformity with the individual taste can be performed.

Further, when the first external storage medium is used as a master, it is possible to prevent the stored setting information from being erased in error.

Further, when the second external storage medium is personally used, rewriting of the stored setting information not to be rewritten later can be inhibited so that it is possible to prevent the stored setting information from being erased in error.

Further, since distinction of each setting information can be confirmed by display, operationality can be improved.

Further, operationality can be improved since it is understood by a warning that the rewriting of the setting information of the external storage medium is inhibited.

Further, it is possible to perform a specific operation for changing a preset operation for photographing in the lens system, or a specific operation for partially changing the preset operation for photographing. Thus, an operation as the lens system of an individual taste can be arbitrarily set. Since an operation for specific photographing can be obtained in the lens system instead of a camera body, it is possible to particularly systematically simplify a construction for changing or adding a lens control operation divided by the individual taste.

Further, a control parameter of an optical means for controlling focus, zoom, etc. divided by each individual taste can be particularly set by the individual taste.

Further, required setting information can be selectively stored from the first external storage medium to the second external storage medium so that an operation for photographing in conformity with the individual taste can be performed.

Further, when the first external storage medium is used as a master, it is possible to prevent the stored setting information from being erased in error.

Further, when the second external storage medium is personally used, rewriting of the stored setting information not to be rewritten later can be inhibited so that it is possible to prevent the stored setting information from being erased in error.

Further, since distinction of each setting information can be confirmed by display, operationality can be improved.

Further, operationality can be improved since it is understood by a warning that the rewriting of the setting information of the external storage medium is inhibited.

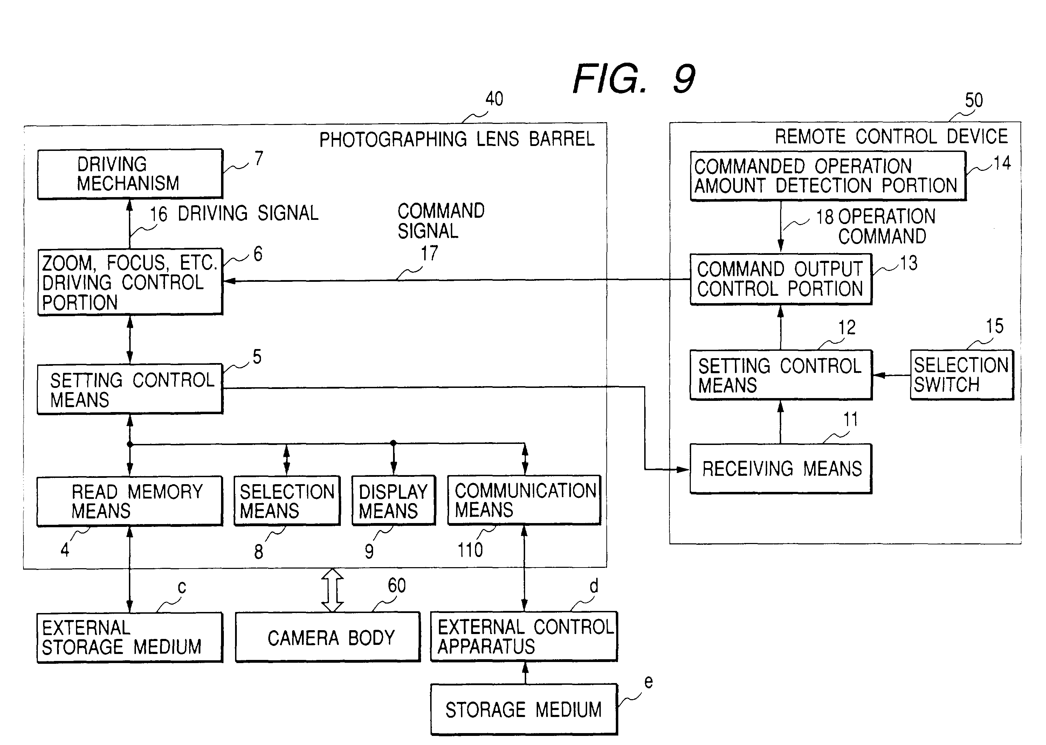

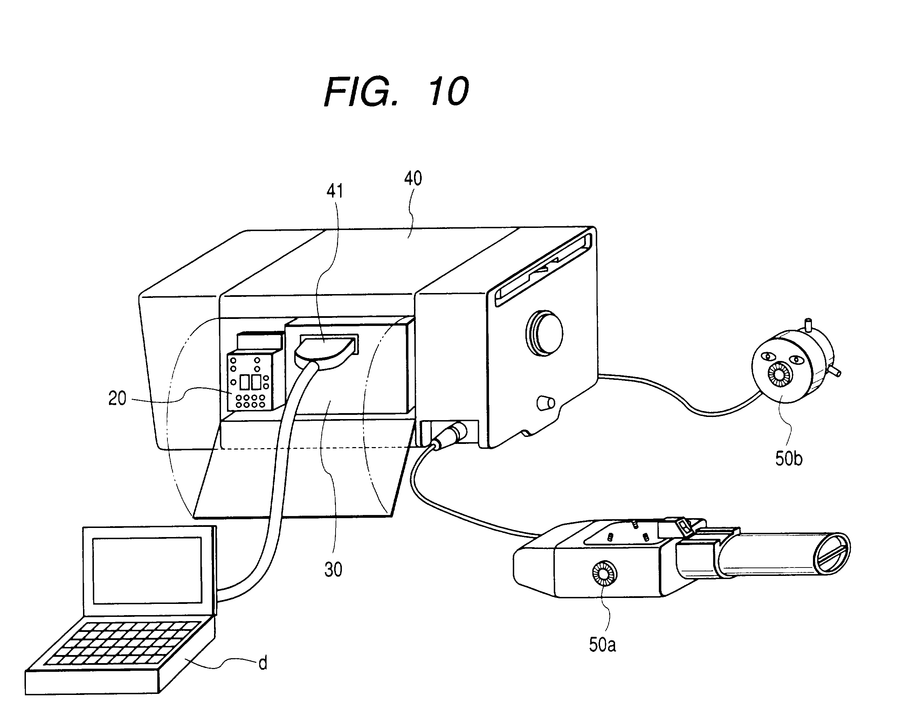

Figs. 9 and 10 are respectively a control block diagram of a zoom, focus, etc. optical movable member in a lens system in a television camera system showing the features of a third embodiment, and a view showing the outer views of a lens barrel and a remote control device.

In Figs. 9 and 10, reference character c designates a card memory storing contents thereto, a storage medium in a communication network, and an external storage medium of a memory of a camera body, etc. A photographing lens barrel 40 has a zoom portion, a focus portion and a control circuit described later and is mounted to the camera body 60.

A remote control device 50 for the photographing lens barrel is constructed by e.g., a zoom command (50a in Fig. 10) and a focus command (50b in Fig. 10). Accordingly, the camera system is constructed by the photographing lens barrel 40, the remote control device 50 and the camera body 60. The lens system used in the camera system is constructed by the photographing lens barrel 40 and the remote control device 50.

In Fig. 10, a memory card unit 20 reads information of the external storage medium c and displays the read information and has a selection switch for performing control according to a photographing situation, etc. A detailed construction of this memory card unit is common to that in Fig. 3. Therefore, an explanation of this memory card unit is omitted here.

A television lens control portion 30 performs control relating to the above television lens system having a zoom, focus, etc. driving control portion and others.

Stored contents of the above-mentioned external storage medium c are also common to those in Figs. 4. Therefore, an explanation of these stored contents is omitted here.

An operation of the lens system controlled on the basis of such stored information will next be explained here with reference to Fig. 9.

A read record means 4 reads and records information from an external storage medium (card memory). The read record means 4 reads and records setting information, etc. of various kinds of control parameters, etc. mentioned above with respect to a photographing lens barrel 40 and a photographing lens remote control device 50 from the card memory c as the external storage medium. This read record means 4 has plural memory areas and can temporarily store (record) the read information from the card memory c as the external storage medium. The read record means 4 can also store selected read information described later and edited individual information.

A setting control means 5 changes and sets various kinds of driving control parameters (arithmetic coefficients, etc.) of a zoom, focus, etc. driving control portion 6 to contents according to a setting item on the basis of the setting information, etc. read from the read record means 4 when this setting information is setting information relating to the driving control of a movable optical member (a zoom lens, a lens for focus or correction) for e.g., zoom, focus, etc. When this setting information is setting information on a side of the photographing lens remote control device 50, the setting control means 5 transmits this setting information to a receiving means 11 within the photographing lens remote control device 50.

The zoom, focus, etc. driving control portion 6 outputs a driving signal 16 for driving a motor of zoom, focus, etc. on the basis of a control parameter relating to the driving control of zoom, focus, etc. set by the setting control means 5, and a command signal 17 of zoom, focus, etc. given from a command output control portion 13 within the photographing lens remote control device 50.

A driving mechanism 7 includes a motor for operating a focus lens, a zoom lens, etc., and a potentiometer and a rotary encoder, etc. for position detection. The driving mechanism 7 optically changes zooming, focusing, etc. on the basis of the output signal from the driving control portion 6.

A selection means 8 selects information read from the setting information within the card memory c as an external storage medium read from the read record means 4, or selects reading of setting information obtained by communication from an external control apparatus d such as a personal computer, etc. described later. The selection means 8 also selects setting information recorded to the external storage medium when the setting information held within the photographing lens barrel 40 or the photographing lens remote control device 50 is recorded to the external storage medium (e.g., card memory).

A display means 9 is arranged so as to confirm a state of the setting information, etc. by an operator. A communication means 110 can communicate with the external control apparatus d such as a personal computer, etc. by connecting an input-output terminal group for connection and an input-output terminal group of the external control apparatus to each other as shown in Fig. 10.

Reference character d designates the external control apparatus such as a personal computer, etc.

Reference character e designates a storage medium such as a floppy disk, etc. to which software stored in the external control apparatus is recorded.

A receiving means 11 is arranged in the photographing lens remote control device 50 and receives setting information to be changed on a side of the photographing lens remote control device 50 sent from the setting control means 5 within the photographing lens barrel 40.

A setting control means 12 on a side of the photographing lens remote control device 50 performs various kinds of setting operations on the side of the photographing lens remote control device 50 on the basis of various kinds of setting information from the receiving means 11 and information from a selection switch 15 attached to the photographing lens remote control device 50. For example, when the setting information relates to command control, this setting control means 12 sets a parameter, etc. relating to the command control to the command control portion 13.

A commanded operation amount detection portion 14 outputs an operation command 18 proportional to an operation amount of an operator such as a cameraman, etc. when the operator performs zoom and focus operations, etc. A command output control portion 13 generates a command signal 17 given to the photographing lens barrel 40 on the basis of an operation command 18 from the commanded operation amount detection portion 14 and a parameter relating to command control set by the setting control means 12 within the photographing lens remote control device 50.

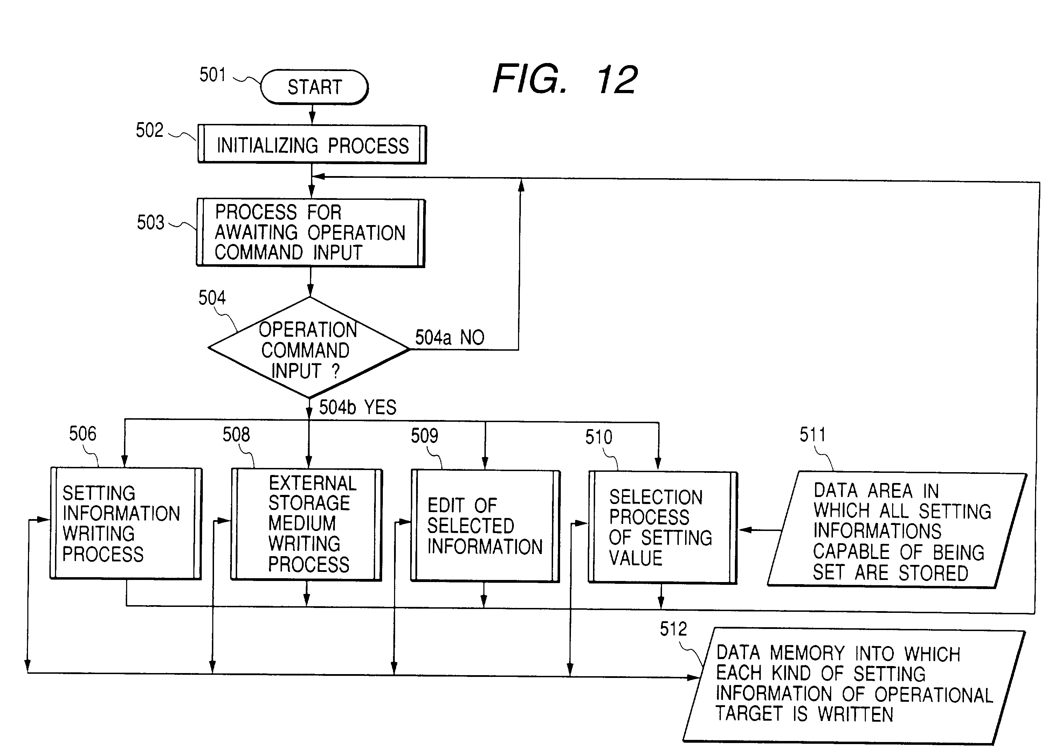

Here, a process performed by using the above software e in the external control apparatus d such as a personal computer, etc. will next be explained by a flow chart of the external control apparatus of Fig. 12.

In Fig. 12, reference numeral 512 designates a data memory area (hereinafter called a work memory) secured on a memory of the external control apparatus. In each of process routines 506 to 510 described later, setting information as each of various kinds of control information is written, read, changed, etc. with respect to this memory area.

Reference numeral 501 designates a start of processes. In a routine 502 of an initializing process, an initial screen is displayed and an initial communication connection with a photographing lens system is started and confirmed, etc. Namely, in a connection with the photographing lens barrel 40, a command showing the connection is first sent to a side of the photographing lens barrel 40. After a command as a reply to this sent command is received from the side of the photographing lens barrel 40, the initializing process is performed in the external control apparatus d.

In a routine 503 of a process for awaiting an operation command input, contents of the work memory 512 are displayed and each of various kinds of setting information set by the above setting means of a photographing lens is displayed. Further, extraction and insertion of the external storage medium are detected and its state is displayed, and each of various kinds of setting information of the external storage medium is displayed in the external control apparatus.

Reference numeral 504 designates a process for judging existence or nonexistence of a command input from a keyboard, etc. Reference numeral 504a designates a branch provided when the command input is incorrect and there is no command input.

Reference numeral 504b designates a branch provided when the command input is correct. In this case, the process routine 504b is transferred to process routines 506, 508 to 510 on the basis of the command input.

Reference numeral 506 designates a process for sending each of various kinds of setting information in the work area 512 to the setting means 5 of the photographing lens barrel 40 through the communication means 110, and updating servo characteristics on a side of the photographing lens barrel and operation characteristics on a side of the remote control device.

Reference numeral 508 designates a process for sending a setting value of each of various kinds of setting information in the work area to the read register means 4 within the photographing lens barrel, and writing this setting value to the memory card c as an external storage medium.

Reference numeral 509 designates a process for changing and editing the setting value of each of various kinds of setting information in the work memory.

In a process routine 510, a desirable setting value is selected from a data area 511 to which all setting information able to be set to the photographing lens barrel 40 and the remote control device 50 are stored in advance. In this process routine 510, this selected setting value is further written to the work memory 512.

An operation flow chart of the photographing lens barrel of Fig. 12 will next be explained.

Reference numeral 520 designates a start of processes.

In a routine 521 of an initializing process, a connection with the external control apparatus d is discriminated by a command sent from the external control apparatus, and a command on a lens side as a reply is transmitted to the external control apparatus d. Further, each of various kinds of setting information set at present by the setting control means 5 within the photographing lens barrel, each of various kinds of setting information of the memory card (external storage medium) c, and information of extracting and inserting states of the memory card c are sent to the external control apparatus.

In this initializing process, an operating state of the setting control means 5 within the photographing lens barrel is changed from a rewrite inhibiting state to a rewritable state, and rewriting of the setting information to the memory card c as the external storage medium through the read record means 4 is changed from an inhibiting state to a rewritable state.

Reference numeral 523 designates a process for waiting a command from the external control apparatus d, and it proceeds to the following control subroutines 524 or 525 in accordance with a kind of this command when this command is transmitted.

In the subroutine 524, setting information set by the external control apparatus d is written (recorded) to the setting control means 5 within the photographing lens barrel by receiving the command from the external control apparatus d.

In the subroutine 525, the setting information set by the external control apparatus d is written (recorded) to the external storage medium c through the read record means 4 by receiving the command from the external control apparatus d.

In the memory card c as the external storage medium, there are a master-like memory card cl as a first external storage medium and a personal memory card c2 as a second external storage medium. The master-like memory card c1 is constructed by plural sheets to which all setting values are stored every setting item. An operator individually possesses the personal memory card c2.

A specific example and a setting operation of the setting information writable from the external control apparatus d will next be explained.

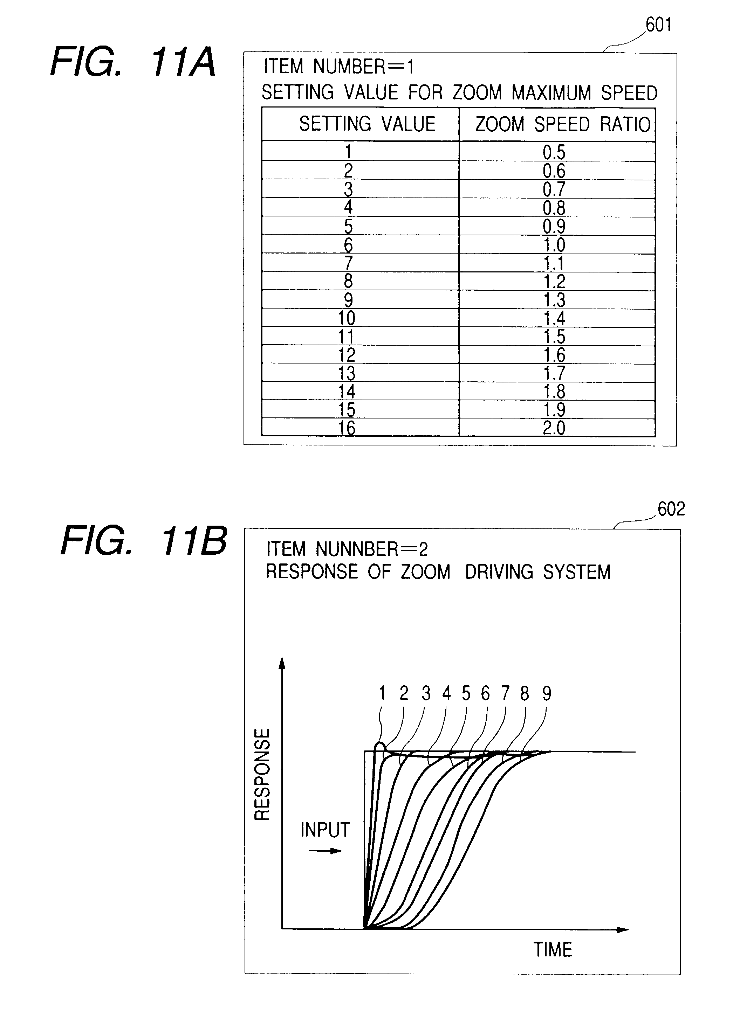

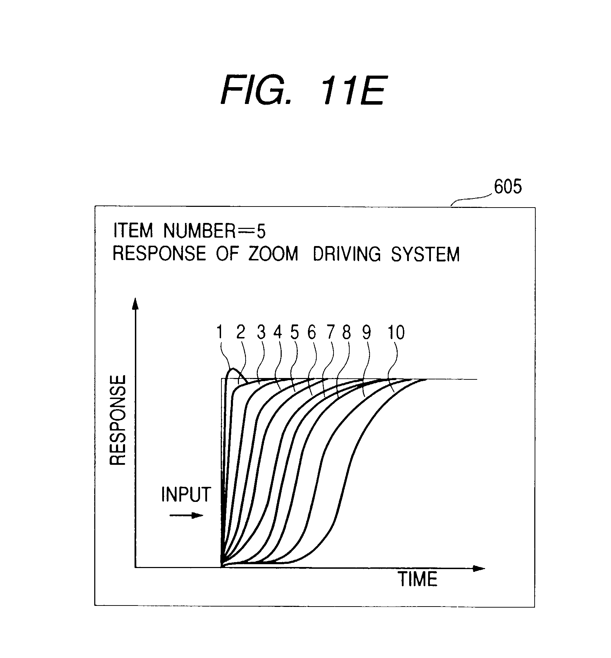

In Figs. 11A to 11E, reference numeral 601 designates a ratio of a zoom speed to a standard zoom speed to select a zoom maximum speed. Reference numeral 602 shows a responsive waveform to a step input to select a response of a zoom driving system. Reference numeral 603 designates a ratio of a dead zone width to a standard dead zone width to select the dead zone width of a zoom demand operation member.
Reference numeral 604 designates a graph for selecting the relation of a zoom demand operation amount and an output command. Reference numeral 605 designates a responsive waveform to the step input for selecting a response of a zoom demand.

Each of reference numerals 601 to 605 designates one portion of setting items relating to zoom, but similar setting information can be set in items of focus and others in addition to these setting items.

An operator confirms each of various kinds of setting information designated by reference numerals 601 to 602 on a display screen of the external control apparatus d. The operator then sequentially selects a setting value every item screen while the operator sees tables and graphs.

For example, in the case of Figs. 11A to 11E, the zoom maximum speed is set to 0.7 times the standard maximum speed, and the dead zone width of the zoom demand is set to 1.3 times the standard dead zone width. Further, a largest inclination is set in the relation of an operation amount of the zoom demand and an output command value. This case will next be explained.

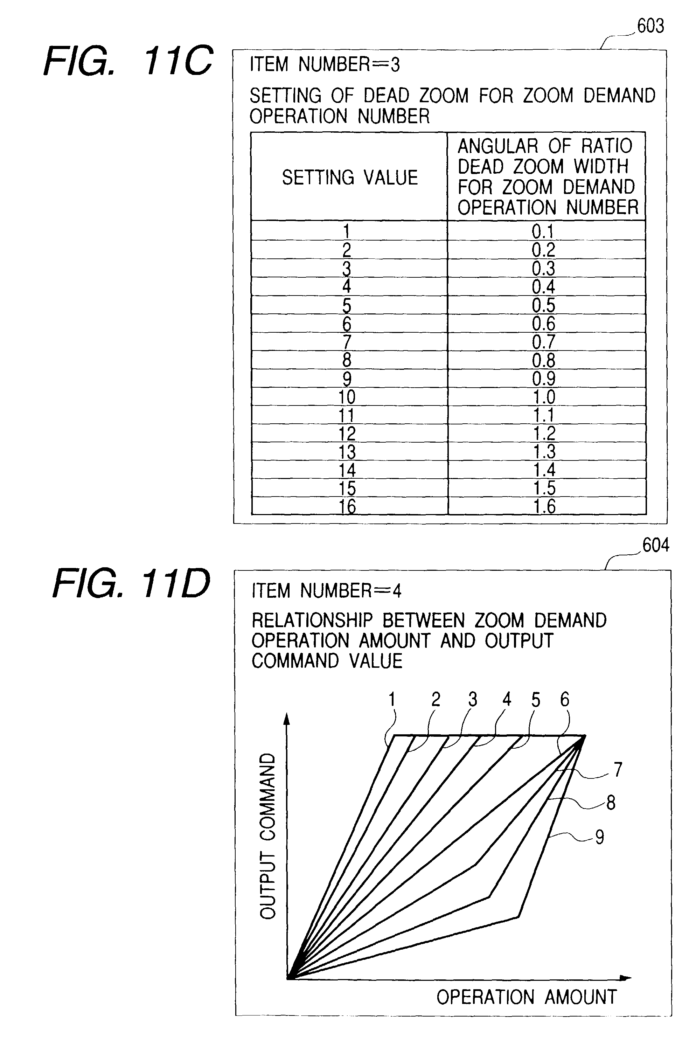

First, a setting value 3 is selected from a selecting screen of the zoom maximum speed of reference numeral 601 in Fig. 11A. Next, a setting value 13 is selected on a setting screen of the dead zone width of the zoom demand operation member of reference numeral 603 in Fig. 11C. Next, a setting value 1 is selected on a setting screen of the zoom demand operation member and the output command value designated by reference numeral 604 in Fig. 11D.

A setting information write process 506 of Fig. 12 is then executed so that each of the selected setting information is written to the setting control means 5 within the photographing lens barrel 40 and is set.

Thus, the operator can easily confirm an operation by using the control setting values selected from the screen of the external control device d such as a personal computer, etc.

When the selected setting information includes setting relating to the photographing lens remote control device 50, each of various kinds of setting values is transmitted to the setting control means 12 within the photographing lens remote control device 50 from the setting control means 5 on a side of the photographing lens barrel 40 via the receiving means 11 within the photographing lens remote control device 50.

The setting control means 12 on a side of the photographing lens remote control device 50 determines a parameter for command control, etc. to be set to the command control portion 13 in accordance with each of various kinds of setting values inputted through the receiving means 11 and a state of the selection switch 15 attached to the photographing lens remote control device 50. The setting control means 12 also sets this parameter, etc.

The command control portion 13 converts an operation command 16 from the commanded operation amount detection portion 14 on the basis of the setting value set by the setting control means 12 and outputs this converted operation command to the photographing lens barrel 40 as a command signal 17.

Thus, the operator can easily change each of various kinds of parameters, etc. of the photographing lens barrel 40 and the photographing lens remote control device 50 by using the external control apparatus d. For example, operation characteristics of a zoom demand and a focus demand using a switch and a volume are conventionally slightly changed with respect to driving control of zoom, focus, etc. In comparison with this conventional change, characteristics close to infinity are obtained by changing zoom servo characteristics, focus servo characteristics, zoom demand operation characteristics, focus demand operation characteristics, etc. according to a photographing situation, etc. by plural setting items and plural setting values.

The operator performs selecting and reading operations of the setting information from the external control apparatus d. Subsequently, the operator connects the external storage medium c individually possessed by the photographer to the external storage medium read record means 4 and a recording operation for executing the subroutine 508 in Fig. 12 is performed. Thus, the setting information obtained from the external control apparatus d can be recorded to the external storage medium individually possessed. Accordingly, the operator can easily construct a camera system or a photographing lens system according to an operator's taste.

The setting information writable to the setting control means 5 of the photographing lens barrel 40 or the external storage medium c is not set to one set, but can be set to plural sets (eight sets in the embodiment) as shown in Fig. 4. Accordingly, the operator can select a set conforming to a photographing state at that time from the plural sets.

A fourth embodiment will next be explained.

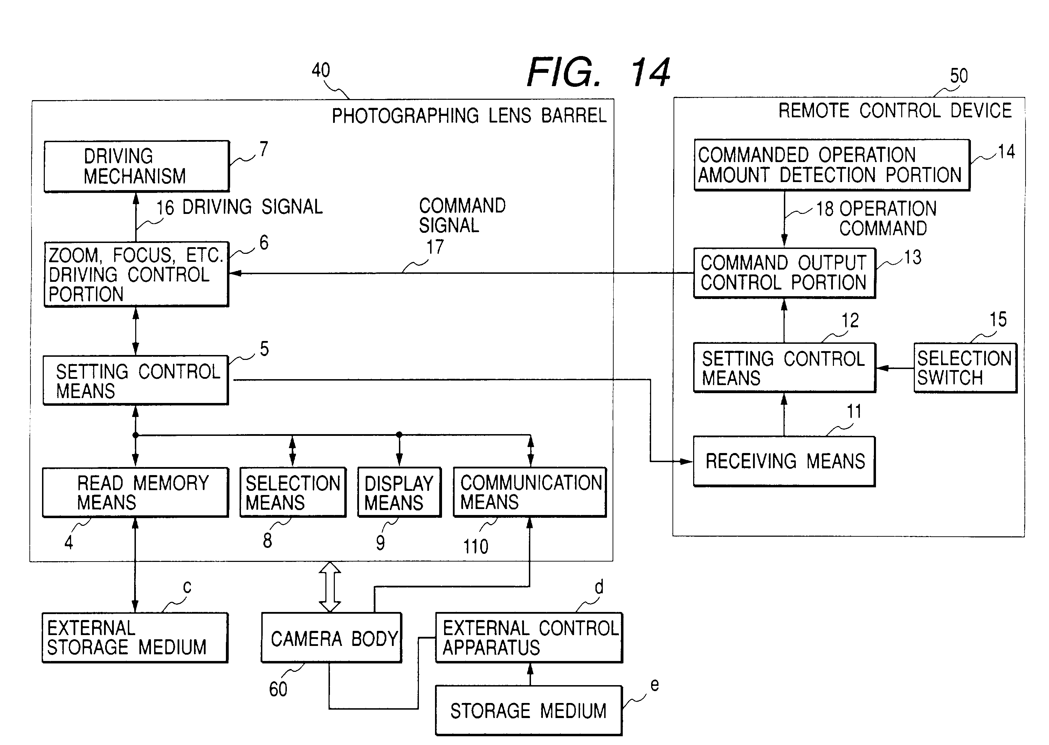

In an embodiment of Fig. 14, the external control apparatus d is not directly connected to the photographing lens barrel 40, but is connected to a camera body 60. Setting information from the external control apparatus d is written to the photographing lens barrel 40 or the external storage medium c through communication of the camera body 60 and a communication means 110 of the photographing lens barrel 40.

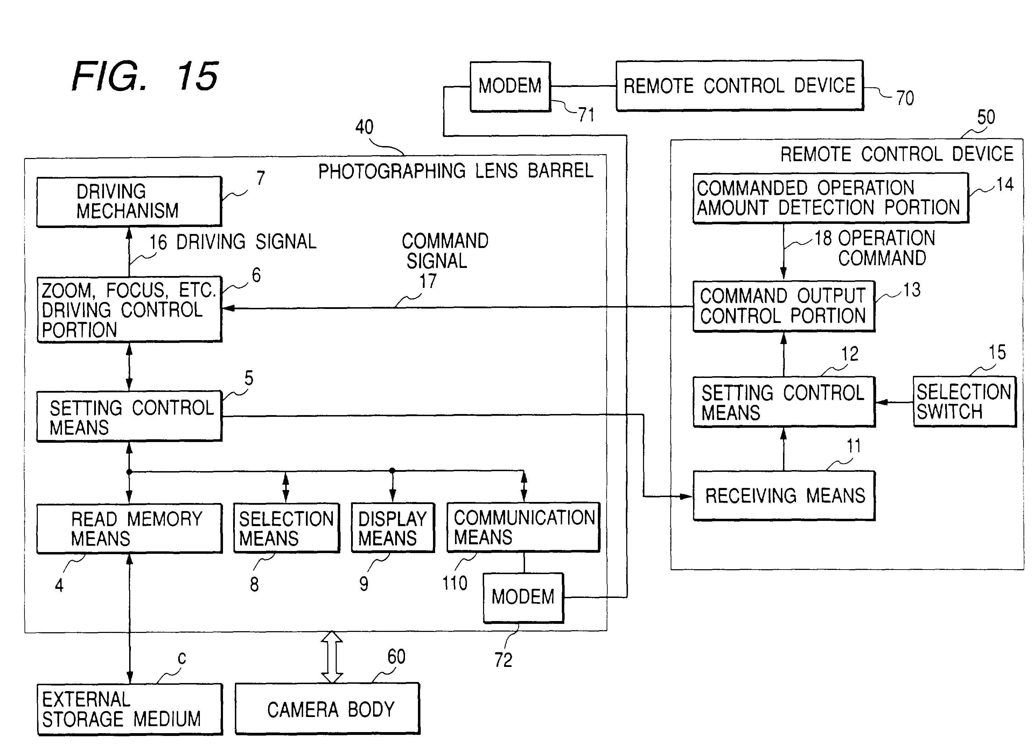

In a fifth embodiment of Fig. 15, the external control apparatus d is not directly connected to the photographing lens barrel 40, but setting information is written from a television station or a manufacturing source of the lens system (camera system) to the photographing lens barrel 40 or the external storage medium c by a telephone or a satellite radio wave using a second remote control device 70. In this case, each of modems 71 and 72 is required for conversion to a telephone line or a radio wave and return. In this case, the second remote control device 70 is set to an external control apparatus.

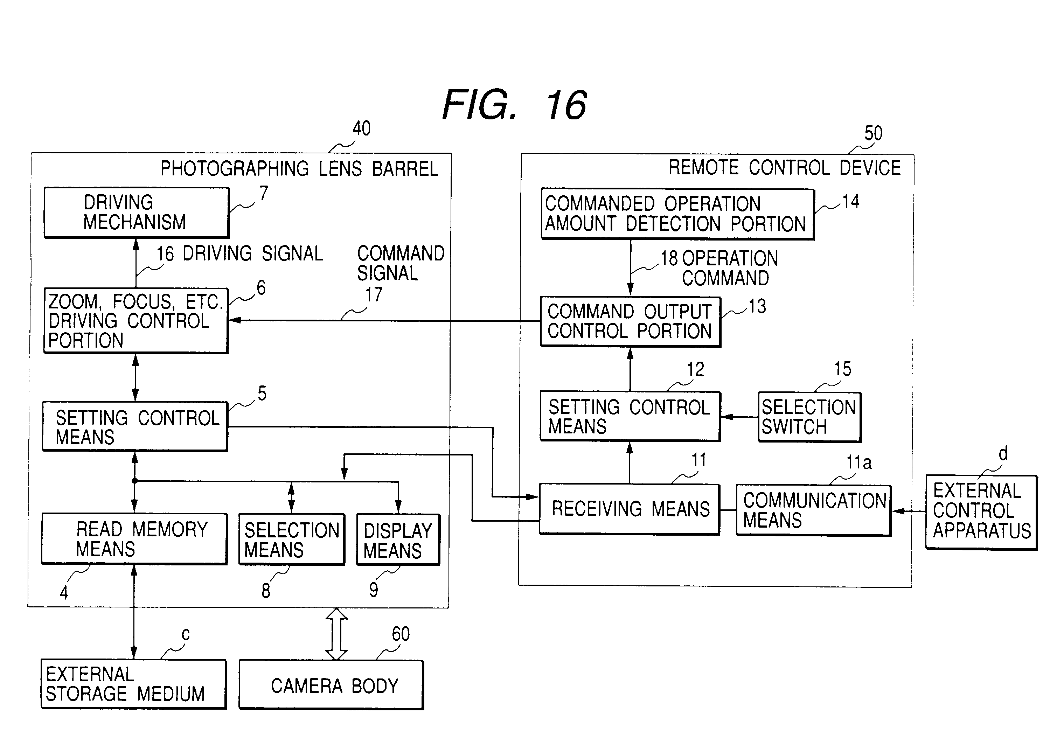

In a sixth embodiment of Fig. 16, the external control apparatus d is connected to the remote control device 50 so that a communication means 11a is newly constructed in the remote control device 50. Setting information obtained through the communication means lla is sent from the receiving means 11 to the setting control means 5 of the photographing lens barrel 40 and can be also rewritten and written to the external storage medium c.

In the above embodiments, the lens system is formed by separating the photographing lens barrel and the remote control device. However, a lens system or a camera system formed by integrating the photographing lens barrel and the remote control device with each other is also naturally included in the scope of the present invention.

In accordance with the third to sixth embodiments described above, it is possible to perform a specific operation for changing a preset operation for photographing in the camera system, or a specific operation for partially changing the preset operation for photographing. Thus, an operation according to an individual taste as the camera system can be arbitrarily set.

Further, control parameters of an optical means for controlling focus, zoom, etc. divided by each individual taste can be particularly set in accordance with the individual taste.

Further, reading of incorrect information can be prevented.

Further, operationality can be improved since distinction of each setting information can be confirmed by display.

Further, operationality in reproduction can be improved since an operation as the camera system of an individual taste can be individually possessed.

Further, it is possible to perform a specific operation for changing a preset operation for photographing in the lens system, or a specific operation for partially changing the preset operation for photographing. Thus, an operation as the lens system of an individual taste can be arbitrarily set. Since an operation for specific photographing can be obtained in the lens system instead of a camera body, it is possible to particularly systematically simplify a construction for changing or adding a lens control operation divided by the individual taste.

Further, a control parameter of an optical means for controlling focus, zoom, etc. divided by each individual taste can be particularly set by the individual taste.

Further, reading of incorrect information can be prevented.

Further, operationality can be improved since distinction of each setting information can be confirmed by display.

Further, operationality in reproduction can be improved since an operation as the lens system of an individual taste can be individually possessed.

Further, it is possible to perform a specific operation for changing a preset operation for photographing in the lens system, or a specific operation for partially changing the preset operation for photographing. Thus, an operation as the lens system of an individual taste can be arbitrarily set. Since an operation for specific photographing can be obtained in the lens system instead of a camera body, it is possible to particularly systematically simplify a construction for changing or adding a lens control operation divided by the individual taste.

Further, operationality in reproduction can be improved since an operation as the lens system of an individual taste can be individually processed.

## Claims

1. A camera system comprising:
reading means for reading setting information relating to photographing from an external storage medium storing the setting information therein;
recording means for storing said read setting information in another external storage medium; and
control means for performing an operation for specific photographing by using said setting information.

2. A camera system according to claim 1, wherein said external storage medium comprises a first external storage medium storing said setting information therein in advance and a second external storage medium newly storing said setting information therein, and wherein said control means performs the operation for said specific photographing by each of said setting information of said first external storage medium and said setting information of said second external storage medium.

3. A camera system according to claim 1 or 2, wherein said setting information is plural kinds of control parameters of a movable optical means.

4. A camera system according to claim 2 or 3, wherein plural kinds of said setting information are stored in said first external storage medium, and said reading means selectively reads only specific setting information from said stored setting information.

5. A camera system according to claim 2, 3 or 4, wherein said first external storage medium has information for inhibiting rewriting of said setting information.

6. A camera system according to claim 2, 3 or 4, wherein said second external storage medium has information selectively showing an inhibiting case of rewriting of said setting information and an allowing case of this rewriting.

7. A camera system according to any one of claims 1 to 6, further comprising:
display means for displaying information corresponding to contents of said setting information stored in said external storage medium.

8. A camera system according to claim 6, further comprising:
warning means for giving a warning to rewriting using said recording means when inhibiting information of said rewriting is stored in said second external storage medium.

9. A camera system comprising:
communication means for communicating with an external apparatus;
reading means for reading setting information relating to photographing from the external apparatus capable of setting said setting information through said communication means; and
control means for performing an operation for specific photographing by using said read setting information.

10. A camera system according to claim 9, further comprising:
another reading means for reading the setting information relating to photographing from the external storage medium.

11. A camera system according to claim 9 or 10, wherein said setting information is plural kinds of control parameters of a movable optical means.

12. A camera system according to claim 9 or 10, wherein discriminating means for discriminating connection of said external apparatus is arranged, and said reading means switches reading of said setting information to a readable operation when the connection with the external apparatus is discriminated by said discriminating means.

13. A camera system according to any one of claims 9 to 12, further comprising:
display means for displaying information corresponding to contents of said setting information read by said reading means.

14. A camera system according to claim 10, wherein recording means for storing said setting information read from said external apparatus in said external storage medium is arranged.

15. A camera system according to any one of claims 9 to 14, wherein a personal computer is used as said external apparatus, and said setting information can be changed by operating said personal computer.

16. A lens system comprising:
reading means for reading setting information relating to photographing from an external storage medium storing the setting information therein;
recording means for storing said read setting information in another external storage medium; and
control means for performing an operation for specific photographing by using said setting information.

17. A lens system according to claim 16, wherein said external storage medium comprises a first external storage medium storing said setting information therein in advance and a second external storage medium newly storing said setting information therein, and wherein said control means performs the operation for said specific photographing by each of said setting information of said first external storage medium and said setting information of said second external storage medium.

18. A lens system according to claim 16 or 17, wherein said setting information is plural kinds of control parameters of a movable optical means.

19. A lens system according to claim 17, wherein plural kinds of said setting information are stored in said first external storage medium, and said reading means selectively reads only specific setting information from said stored setting information.

20. A lens system according to any one of claims 17 to 19, wherein said first external storage medium has information for inhibiting rewriting of said setting information.

21. A lens system according to any one of claims 17 to 20, wherein said second external storage medium has information selectively showing an inhibiting case of rewriting of said setting information and an allowing case of this rewriting.

22. A lens system according to any one of claims 16 to 21, further comprising:
display means for displaying information corresponding to contents of said setting information stored in said external storage medium.

23. A lens system according to claim 21, further comprising:
warning means for giving a warning to rewriting using said recording means when inhibiting information of said rewriting is stored in said second external storage medium.

24. A lens system according to any one of claims 16 to 23, wherein said lens system comprises a lens barrel portion and a remote control portion.

25. A lens system comprising:
communication means for communicating with an external apparatus;
reading means for reading setting information relating to photographing from the external apparatus capable of setting said setting information through said communication means; and control means for performing an operation for specific photographing by using said read setting information.

26. A lens system according to claim 25, further comprising:
another reading means for reading said setting information from the external storage medium storing the setting information relating to photographing therein.

27. A lens system according to claim 25 or 26, wherein said setting information is plural kinds of control parameters of a movable optical means.

28. A lens system according to any one of claims 25 to 27, wherein discriminating means for discriminating connection of said external apparatus is arranged, and said reading means switches reading of said setting information to a readable operation when the connection with the external apparatus is discriminated by said discriminating means.

29. A lens system according to any one of claims 25 to 28, further comprising:
display means for displaying information corresponding to contents of said setting information read by said reading means.

30. A lens system according to claim 26, wherein recording means for storing said setting information read from said external apparatus in said external storage medium is arranged.

31. A lens system according to any one of claims 25 to 30, wherein a personal computer is used as said external apparatus, and said setting information can be changed by operating said personal computer.

32. A lens system according to any one of claims 25 to 31, wherein said setting information from said external apparatus is sent to said reading means through a camera body.

33. An external storage medium used in a camera system, said camera system comprising:
reading means for reading setting information relating to photographing from said external storage medium storing the setting information therein;
recording means for storing said read setting information in another external storage medium; and
control means for performing an operation for specific photographing by using said setting information.

34. An external storage medium used in a lens system, said lens system comprising:
reading means for reading setting information relating to photographing from the external storage medium storing the setting information therein;
recording means for storing said read setting information in another external storage medium; and
control means for performing an operation for specific photographing by using said setting information.

35. A camera including means for controlling the zoom function and/or focussing function of a lens system, reading means for reading control parameters relating to the zoom and/or focussing function of the lens system from an external storage medium, storage means for storing the read control parameters and control means responsive to the stored parameters whereby when an operator selects a zoom and/or a focussing operation of the camera the selected operation is carried out in a manner defined by the stored parameters.
